# EUROPEAN PATENT APPLICATION

(11) **EP 4 838 768 A1**
(43) Date of publication of application: **11.11.2026**
(21) Application number: 25174319.1
(22) Date of filing: 05.05.2025
(51) Int. Cl.: H02M 1/00, H02M 5/458, H02M 7/5395, H02M 1/42

(54) **MULTI-PHASE BACK-TO-BACK CONVERTER**

(71) Applicant: Technische Universität München, in Vertretung des Freistaates Bayern, 80333 München (DE)
(72) Inventor: LEONTARIS, Christos, 80333 Munich (DE); MAIA DE SOUSA, Gean Jacques, 80333 Munich (DE); LOBO HELDWEIN, Marcelo, 80333 Munich (DE)
(74) Representative: Hoefer & Partner Patentanwälte mbB

(57) **Abstract**

Multi-phase back-to-back converter (1), henceforth BBC (1), wherein a number of phases is equal to or larger than three; comprising a voltage source rectifier (2), henceforth VSR (2), connected to an AC input voltage and comprising a plurality of parallel rectifier half-bridges, each rectifier half-bridge comprising two series-connected rectifier switches (T_{a,h} - T_{c,l}); a voltage source inverter (3), henceforth VSI (3), connected to a load for AC output, and comprising a plurality of parallel inverter half-bridges, each inverter half-bridge comprising two series-connected inverter switches (T_{A,h} - T_{C,l}); a DC-link (C_{DC}) connected between the VSR (2) and the VSI (3); and a control unit (4), configured to control switching of the rectifier switches (T_{a,h} - T_{c,l}) and of the inverter switches (T_{A,h} - T_{C,l}); wherein the control unit (4) is configured to drive one of the VSI (3) and VSR (2) with N-1 DPWM operation and the other with N-2 DPWM operation and/or drive both with N-2 DPWM operation, with N-1 DPWM operation being defined as an operation in which one respective half-bridge is clamped to a high-side or low-side rail of the DC-link (C_{DC}), and N-2 DPWM operation being defined as an operation in which two respective half-bridges are clamped to a high-side or low-side rail of the DC-link (C_{DC}), with in both of N-2 DPWM and N-1 DPWM only the switches (T_{a,h} - T_{c,l}, T_{A,h} - T_{C,l}) of the non-clamped half-bridge(s) switching.

## Description

### Field of the Invention

The invention concerns a multi-phase back-to-back converter. The invention also concerns methods of operating a multi-phase back-to-back converter.

### Background of the Invention

In the field of energy and power electronics, especially for industrial applications, AC-AC converter topologies have been proposed in the literature to interface a three-phase grid with an electric motor.

Among them, the Voltage Source Back-to-Back Converter (V-BBC) is the most commonly used in industrial applications requiring bidirectional power flow, i.e., when the energy used for braking an electric motor is to be regenerated to the feeding power grid or when a variable speed generation system is connected to three-phase grids, such as in wind power generation systems. This power converter topology is preferred in the industry for its simplicity and the relatively low costs.

The typical deployment of this converter topology might use different modulation schemes. Among them discontinuous PWM modulation, equivalent to five segment space vector modulation (SVM), is known to reduce switching losses for a given switching frequency.

S. Bernet, S. Ponnaluri, and R. Teichmann, "Design and loss comparison of matrix converters, and voltage-source converters for modern ac drives," IEEE Trans. Ind. Electron., vol. 49, no. 2, pp. 304-314, Apr. 2002, and T. Friedli, J. W. Kolar, J. Rodriguez, and P. W. Wheeler, "Comparative evaluation of three-phase AC-AC matrix converter and voltage DC-link back-to-back converter systems," IEEE Trans. Ind. Electron., vol. 59, no. 12, pp. 4487-4510, Dec. 2012 proposed the use of discontinuous modulation for one or both the involved converter stages.

However, these known modulation schemes merely consider one or both converters without synergy or cooperation therebetween, and as a result, the efficiency of the resulting system has been limited by the lack of cooperation between the two converters that form a V-BBC.

Recently, the Current source Back-to-Back Converter (C-BBC) has been considered as an alternative for grid-connected VSD applications. In this case, a required filter volume is minimized since only two magnetic components (DM/CM) are used at the DC-Link. Output voltage at a machine or load side is purely sinusoidal, reducing motor harmonics losses. However, the control structure for the C-BBC is highly complex and expensive. For 230 V RMS phase-to-neutral mains voltage, 24 semiconductors (12 packs of anti-series connected SiC MOSFETs) are commonly employed.

Lastly, another AC-AC converter concept is the class of converters commonly known as matrix converters (MCs). No storage element is required, the system's lifetime is extended since DC-link capacitors are omitted, and higher efficiency than the V-BBC can achieved. However, one crucial drawback of the MC is its lack of voltage step-up capability. The machine load should be adjusted to the respective specifications each time, such that the MC concepts have not yet found many applications in the industry. Furthermore, protecting power semiconductors of an MC against grid-side overvoltages is very challenging due to the lack of energy storage devices in its structure.

In the prior art, Current Source Converters (CSC) are known from, for example, WO 2020/157053 A1 and WO 2121/9761 A1, and Voltage Source Converters (VSC) are known from US 2022/085725 A1. However, these examples address 2-stage AC-DC applications, where the AC-DC converter interfaces with the grid, ensuring unity power factor and a subsequent DC-DC stage works synergistically with the AC-DC unit for loss-optimal operation.

### Summary

It is an object of the present invention to overcome these deficiencies. In particular, it is an object of the present invention to provide a multi-phase back-to-back converter with reduced overall switching losses and preferably reduced switching loss of individual stages thereof. Preferably, it is an object of the present invention to provide a multi-phase back-to-back converter and control method thereof which achieves a synergetic modulation/control between rectifier and inverter stages of the converter, which could make use of degrees of freedom to reduce the overall switching losses, preferably in addition to those of the individual stages.

The solution of these objects is achieved by the subject matter of the independent claim. The dependent claims contain advantageous embodiments of the present invention.

In particular, the solution of at least one of or all of these objects is achieved by the multi-phase back-to-back converter according to claim 1. Henceforth, the multi-phase back-to-back converter will be referred to as "BBC". A number of phases of the BBC is equal to or larger than three.

The BBC comprises a voltage source rectifier (henceforth "VSR" or "rectifier stage") that is connected to an AC input voltage. The VSR comprises a plurality of parallel rectifier half-bridges, wherein each rectifier half-bridge comprises two series-connected rectifier switches.

The BBC further comprises a voltage source inverter (henceforth "VSI" or "inverter stage") that is connected to a load (also referred to as "machine load") for AC output, and comprising a plurality of parallel inverter half-bridges, each inverter half-bridge comprising two series-connected inverter switches.

The BBC comprises a DC-link connected between the VSR and the VSI.

The BBC comprises a control unit, configured to control switching of the rectifier switches and of the inverter switches. Therein, the control unit is configured to drive one of the VSI and VSR with N-1 DPWM operation and the other with N-2 DPWM operation and/or drive both with N-2 DPWM operation.

The N-1 DPWM operation is defined as an operation in which one respective half-bridge (of the VSI or VSR) is clamped to a high-side or low-side rail of the DC-link. The N-2 DPWM operation is defined as an operation in which two respective half-bridges (of the VSI or VSR) are clamped to a high-side or low-side rail of the DC-link. In both the N-2 DPWM and the N-1 DPWM operations, only the switches of the non-clamped half-bridge(s) are further switched by the control unit.

In other words, the control unit is configured to drive one of the VSI and VSR with N-1 DPWM and the other with N-2 DPWM operation, and/or drive both with N-2 DPWM. In the foregoing, in this respect, the "and" possibility refers preferably to different points in time, i.e. different operation modes.

In the sense herein, "DPWM" refers to "discontinuous pulse width modulation". In general, continuous PWM is also preferably employable herein.

By driving one of the VSR or VSI (henceforth also "one of the stages", with "stage" referring to VSR or VSI), with N-2 DPWM operation and driving the other with N-1 DPWM operation or with N-2 DPWM operation, the number of switching transitions are minimized while ensure that the DC-link voltage is near or at a minimum possible level, thereby reducing switching losses and achieving high efficiency. Since one stage is driven with N-2 DPWM, and the other with N-1 DPWM or with N-2 DPWM operation, the present invention achieves a synergistic modulation/control between rectifier and inverter stages of the converter, which makes use of degrees of freedom to reduce the overall switching losses of the BBC.

In some preferable applications, the multi-phase BBC is three-phase (N=3). In such cases, for example, the N-2 DPWM operation may be referred to as "1/3 PWM operation", while the N-1 DPWM operation may be referred to as "2/3 PWM operation". Unless specified, it is to be understood that "1/3 PWM operation" may generally refer to N-2 DPWM operation and these may be used synonymously without (unless specified otherwise) necessarily restricting the number of phases of the BBC, and likewise for the terms "2/3 PWM operation" and "N-1 DPWM operation".

In some preferable applications, the VSR and the VSI are not necessarily of the same phase. For instance, the VSR can be three-phase and the VSI can be six-phase, for example in an application in which a motor is driven with six-phase via the VSI, but is connected to a three-phase grid via the VSR. In such cases, where the number N of phases differs between VSR, VSI, the foregoing and the following further holds true. Therein, "N-1" and "N-2" are to be understood as with respect to their particular stage. In other words, "N-1" means "one half-bridge clamped", while "N-2" means "two half-bridges clamped", irrespective of the total number of half-bridges of the respective VSR, VSI. For instance, in a VSR of three-phase and VSI of six-phase, and VSR in N-1 DPWM operation, VSI in N-2 DPWM operation, one half-bridge of the VSR is clamped and two half-bridges of the VSI are clamped (as also in the case of both being of the same phase), which results in two half-bridges of the VSR switching (3 - 1 DPWM) and four half-bridges of the VSI switching (6 - 2 DPWM, i.e. 4/6 DPWM). In an operation of both being operated with N-2 DPWM operation, this would result in one half-bridge of the VSR switching and four half-bridges of the VSI switching.

The two series-connected rectifier and inverter switches will also be respectively referred to as "rectifier/inverter high-side" and "rectifier/inverter low-side" switches.

The AC input voltage will in the following also be referred to as "input phases", and the AC output will in the following also be referred to as "output phases". An "input/output phase-to-phase voltage" will refer to a voltage between two phases of input or output, respectively, and an "input/output phase-to-neutral voltage" will refer to a voltage between a phase of input or output and neutral, respectively.

Preferably, the features regarding clamping one or more half-bridges, and the non-clamped half-bridge(s) switching in the sense herein means that the switches of the non-clamped half-bridge(s) are switched ON/OFF multiple times while the other half-bridge(s) are clamped. In other words, in the clamped half-bridge(s), one of the high-side and low-side switches (depending on which rail is clamped to) is constantly ON during clamping, while the high-side and low-side switches of the other non-clamped half-bridge(s) are switched ON and OFF multiple times. In yet other words, the aforementioned clamping is carried out over multiple switching cycles of switches of the non-clamped half-bridge(s).

As mentioned, the BBC is preferably three or more phase (N > 2). In particular, the BBC is three-phase (N = 3). In some embodiments, the BBC is six-phase (N=6). Therein, preferably, the number of parallel rectifier half-bridges of the VSR and the number of parallel inverter half-bridges of the VSI correspond to the number of phases. In some embodiments, where the number of half-bridges of the VSR, corresponding to its number of phases, and the number of half-bridges of the VSI, corresponding to its number of phases, are different, the BBC's number of phases may be denoted by the higher number of phases. In any case, both the VSI and the VSR are at least three-phase.

Preferably, the BBC is a voltage source back-to-back converter, also referred to as a "V-BBC".

Preferably, the DC-link is connected in parallel between the VSR and the VSI. Further preferably, the DC-link comprises a capacitor or a capacitor bank comprising a plurality of series-connected capacitors.

In preferable embodiments, the control unit is configured to drive the VSR or the VSI having a highest instantaneous phase-to-phase voltage, among all phase-to-phase voltages of the VSR and of the VSI, with N-2 DPWM operation. In other words, the control unit preferably chooses either the VSR or the VSI for N-2 DPWM operation based on which of these has the highest instantaneous phase-to-phase voltage. For instance, the control unit is preferably configured to measure all phase-to-phase voltages of the VSI and of the VSR and/or receive these as inputs, and further calculate the maximum value of all phase-to-phase voltages. The maximum value, particularly the information on which of the stages this value was measured, is used by the control unit to decide which of the stages is to be operated in N-2 DPWM operation. Thereby, the BBC achieves maximizing usage of N-2 DPWM operation, thereby reducing switching losses and increasing efficiency.

Preferably, the control unit is configured to drive the VSI and the VSR respectively with N-1 DPWM or N-2 DPWM (i.e. N-1 + N-2 / N-2 + N-2) simultaneously. Preferably, when for example choosing the stage for N-2 DPWM operation based on the maximum phase-to-phase value, the control unit simultaneously and preferably automatically drives the other stage, i.e. the one not having the maximum phase-to-phase voltage, with N-1 DPWM operation. In other words, when the VSR is driven with N-1 DPWM, the VSI is driven with N-2 DPWM, and vice versa (N-1 + N-2). In other operation modes, for example with equal phase-to-phase voltages, the control unit simultaneously drives both stages with N-2 DPWM operation (N-2 + N-2). Thereby, a highly synergistic and simple control scheme is realized for driving both stages of the BBC, which reduces switching losses and increases efficiency.

Preferably, the control unit is configured to drive the VSI and the VSR both with N-2 DPWM operation, respectively and simultaneously. In particular, the control unit is preferably configured to drive both with N-2 DPWM operation simultaneously when the control unit determines frequencies and voltages of both VSI and VSR are substantially equal. Preferably, the control unit is configured to drive both with N-2 DPWM simultaneously when the maximum phase-to-phase voltage of the VSI is equal to that of the VSR, especially with respect to instantaneous maximum phase-to-phase voltages, for example at each point in time during such operation.

In some preferable embodiments, the control unit is configured to selectively change between operation modes of which of the VSI and the VSR being driven with N-1 DPWM or N-2 DPWM. In other words, during operation of the BBC, the control unit preferably changes between for example a first mode of the VSI being driven with N-1 DPWM and the VSR being driven with N-2 DPWM and a second mode of the VSI being driven with N-2 DPWM and the VSR being driven with N-1 DPWM. In particular and in preferable combination with calculating the highest instantaneous phase-to-phase voltage, the control unit changes which of the stages is driven with N-2 DPWM when the stage demonstrating the highest instantaneous phase-to-phase voltage changes. Thereby, the BBC advantageously achieves synergistic control of the stages, reduced switching losses, and increased efficiency over a wide range of input or output variables and transients.

Preferably, the control unit is configured to drive the switches of the non-clamped half-bridges of the VSI and the VSR during N-2 DPWM with a longer average duty cycle than during N-1 DPWM. In other words, preferably, the average duty cycle of the switches of the non-clamped half-bridges, i.e. the half-bridges performing switching, is longer during N-2 DPWM than during N-1 DPWM. Advantageously, the BBC thereby achieves the synergistic control, reduced switching losses, and increased efficiency with further increased voltage stability.

Advantageously, the control unit is configured to carry out a transition operation of transitioning between which of the VSI and the VSR are driven with N-1 DPWM or N-2 DPWM. In other words, preferably, in the foregoing of changing between which of the stages is driven with N-2 DPWM and N-1 DPWM, the control unit preferably gradually changes the modes of operation, especially non-instantaneous. For example, with the example of highest instantaneous phase-to-phase voltage, the control unit is configured to change between N-2 and N-1 of a certain stage over a predetermined time period, for example during the time period in which the highest voltage switches between the stages. Further, for example, during a time period in which the voltages at both stages are substantially equal, the control unit is configured to continuously alternate between N-2 DPWM and N-1 DPWM of the respective stages.

Preferably, the control unit is configured to, during the transition operation for transitioning from N-2 DPWM to N-1 DPWM, gradually decrease an average duty cycle of the switches of the non-clamped half-bridge(s) of the respective VSI or VSR. Thereby, the BBC advantageously achieves a smooth transition for operating the respective stage with N-2 DPWM operation and then with N-1 DPWM operation, while retaining reduced switching losses and higher efficiency.

Further preferably, the control unit is configured to, during the transition operation for transitioning from N-1 DPWM to N-2 DPWM, gradually increase an average duty cycle of the switches of the non-clamped half-bridge(s) of the respective VSI or VSR. Thereby, the BBC advantageously achieves a smooth transition for operating the respective stage with N-1 DPWM operation and then with N-2 DPWM operation, while retaining reduced switching losses and higher efficiency. Preferably, by employing increased average duty cycle for the stage transition from N-1 DPWM to N-2 DPWM, and vice versa for the other stage, a highly synergistic control of both stages is achieved, which further reduces switching losses and increases efficiency.

Combinations of the foregoing and following methods are, in some preferable cases, to be understood as being carried out over time, one after another. For instance, the operation of claims 7 and 8 can be carried out one after the other, the control unit thus being configured to carry out both operations.

In some preferable embodiments, the control unit is configured to, during N-2 and N-1 DPWM operation, change or permute which half-bridge(s) of the VSI and the VSR are respectively clamped and non-clamped. For example, in VSR with N-2 DPWM operation, and in a three-phase example with three rectifier half-bridges, initially a first half-bridge closest to AC input is clamped to the high-side rail, and a third half-bridge farthest from the AC input is clamped to the low-side rail. Then, especially after a predetermined number of switching cycles of the second half-bridge, the second and first half-bridge are clamped. Thereafter, the third and second half-bridge are clamped, and so on. Similarly in N-1 DPWM operation, first and third half-bridge are switched and second half-bridge is clamped, then second and first half-bridge are switched and third half-bridge is clamped, and then the third and second half-bridge are switched and the first half-bridge is clamped, and so on. Preferably, the control unit is configured to carry out this permutation based on AC input and/or AC output, especially phase-to-phase voltages and/or phase-to-neutral voltages of the AC input and/or AC load.

Preferably, the control unit is configured to, during N-2 DPWM operation, clamp the half-bridge with the highest voltage among the half-bridges of the VSI or VSR to the high-side rail and clamp the half-bridge with the lowest voltage among the half-bridges of the VSI or VSR to the low-side rail. Thereby, switching losses are reduced and efficiency is enhanced, while continuously and securely supplying target voltage.

Further preferably, the control unit is configured to, during the N-1 DPWM operation, clamp the half-bridge with the highest voltage among the half-bridges of the VSI or VSR to the high-side rail or clamp the half-bridge with the lowest voltage among the half-bridges of the VSI or VSR to the low-side rail. Herein, the control unit is preferably configured to always clamp the half-bridge with the highest voltage to the high-side rail. Alternatively, the control unit is preferably configured to always clamp the half-bridge with the lowest voltage to the low-side rail. Preferably, the control unit is configured to selectively clamp the half-bridge with the highest voltage to the high-side rail or clamp the half-bridge with the lowest voltage to the low-side rail.

The following nomenclature is introduced:
- The parallel rectifier half-bridges of the VSR are denoted a, b, c,..., J ∈ j, J denoting a number of the parallel rectifier half-bridges (i.e. denoting the "highest letter" half-bridge) and equal to the number of phases N of the VSR or BBC, wherein the series-connected rectifier switches of each rectifier half-bridge are denoted jh and jl. Thus, in an example of VSR having three phases, i.e. J = 3, the rectifier switches are denoted ah, al (high and low of first half-bridge), bh, bl (high and low of second half-bridge), and ch, cl (high and low of third half-bridge).
- The parallel inverter half-bridges of the VSI are denoted A, B, C,..., K ∈ k, K being a number of the parallel inverter half-bridges equal to the number of phases N of the VSI or BBC, wherein the series-connected inverter switches of each inverter half-bridge are denoted kh and kl. Thus, in an example of the VSI having three phases, i.e. K = 3, the rectifier switches are denoted Ah, Al (high and low of first half-bridge), Bh, BI (high and low of second half-bridge), and Ch, Cl (high and low of third half-bridge).
- The DC-link voltage is denoted Uxz.
- AC phase-to-neutral input voltages are denoted Ua, Ub, Uc,..., ∈ Uj.
- AC phase-to-neutral load voltages are denoted UA, UB, UC,..., ∈ Uk.

Herein, the control unit is preferably configured to control switching of the rectifier switches jh, jl and of the inverter switches kh, kl based on the AC phase-to-neutral input voltages Ua, Ub, Uc,..., ∈ Uj of respective voltages of input phases, and on the AC phase-to-neutral load voltages UA, UB, UC,..., ∈ Uk of respective voltages of load phases.

The control unit is preferably further configured to:
- Calculate:
- a maximum phase-to-neutral input voltage Uvsrmax = max (Uj),
- a minimum phase-to-neutral input voltage Uvsrmin = min (Uj),
- wherein the remaining phase-to-neutral input voltages are Uvsrmid = Ua, Ub, Uc,..., ∉ Uvsrmax v Uvsrmin; and
- calculate a maximum phase-to-neutral load voltage Uvsimax = max (Uk),
- a minimum phase-to-neutral load voltage Uvsimin = min (Uk),
- wherein the remaining phase-to-neutral load voltages are Uvsimid = UA, UB, UC,..., ∉ Uvsimax v Uvsimin.

In other words, the control unit preferably calculates the maximum and minimum of phase-neutral voltages of the input and load, respectively. The remaining phases are essentially denoted "mid", i.e. neither max nor min. Thereby, the control unit preferably achieves synergistic and efficient control of the N-2 DPWM and/or N-1 DPWM operations.

Preferably, the control unit is further configured to:
- calculate rectified shape waveforms, especially in three-phase N=3 calculate six-pulse shape waveforms, using values Uvsrrect = Uvsrmax - Uvsrmin and Uvsirect = Uvsimax
- Uvsimin, respectively, and
- set a target DC-link voltage Uxz to the maximum phases such that Uxz = max(Uvsrrect, Uvsirect).

Thereby, the control unit preferably sets the DC-link voltage Uxz, especially a target voltage, to the maximum voltage of all AC input and output phases, thus providing stable and secure voltage while increasing efficiency and reducing switching losses.

Preferably, the control unit is configured to operate the VSR or the VSI with the corresponding maximum phase of max(Uvsrrect, Uvsirect) with N-2 DPWM operation, and the other with N-1 DPWM operation.

In other words, preferably, the control unit is configured to operate the VSR (2) with N-2 DPWM and the VSI (3) with N-1 DPWM when Uvsrrect > Uvsirect, and to operate the VSI (3) with N-2 DPWM and the VSR (2) with N-1 DPWM when Uvsirect > Uvsvrect, and to operate the VSI (3) and the VSR (2) both with N-2 DPWM when Uvsirect = Uvsrrect.

Further preferably, the control unit is configured to calculate a common mode CM component injection for both N-1 DPWM and N-2 DPWM operation, as: $Dvsr , cm = 2 Uvsrmin / Uxz and Dvsi , cm = 2 Uvsimin / Uxz ;$ and add said CM component to duty cycles of the VSR (2) and the VSI (3) such that: $Dvsr \left(j\right) = 2 Uvsr \left(j\right) / Uxz + Dvsr , cm ,$ and $Dvsi \left(k\right) = 2 Uvsi \left(k\right) / Uxz + Dvsi , cm .$

In a more general explanation, the control unit is preferably configured to calculate the CM component injection for N-1 DPWM and N-2 DPWM operations as: ${d}_{VSR - I , CM} = \frac{{u}_{VSR - I , min}}{\frac{{u}_{xz}}{2}} .$

Therein, Uvsr-i.min is a voltage value of minimum phase of the VSR or of the VSI ("vsr-i" to be understood as vsr or vsi).

Further in this general formulation, the control unit preferably adds said CM component to duty cycles of the VSR and the VSI such that ${d}_{VSR - I , max} = \left({u}_{VSR - I , max}\right) / \left({u}_{xz}/2\right) + {d}_{VSR - I , CM}$ ${d}_{VSR - I , mid} = \left({u}_{VSR - I , mid}\right) / \left({u}_{xz}/2\right) + {d}_{VSR - I , CM}$ ${d}_{VSR - I , min} = \left({u}_{VSR - I , min}\right) / \left({u}_{xz}/2\right) + {d}_{VSR - I , CM}$

Therein, *d*_{VSR-I,max}, *d*_{VSR-I,mid}, *d*_{VSR-I,min} are corresponding duty cycles to the half-bridges connected to the maximum, middle, and minimum phase-to-neutral voltage for the VSR (and the VSI correspondingly).

It is to be understood that the foregoing calculations, when referring to "VSR" or "vsr" are interchangeable between "VSI" or "vsi" and "VSR" or "vsr", as denoted for example by "vsr-i".

By performing the common mode component injection to the duty cycles of the stages, for both N-2 DPWM and N-1 DPWM operations, these modulations are represented via a single equation, resulting in a smooth transition between these modes operation, especially when switching between N-2 DPWM and N-1 DPWM operation of one of the stages.

The present invention also concerns a control method for operating a multi-phase back-to-back converter. Preferably, the foregoing explanations with regard to configuration schemes of the control unit of the BBC are realized as method steps in the control method for operating the BBC. The method steps are preferably carried out by one or more logical or functional blocks of the control unit.

Preferably, the control unit is or comprises a processing unit, preferably a CPU, GPU, FPGA, ASIC, SoC, etc. Further preferably, the control unit comprises a memory unit.

The control unit is preferably connected to sensing units configured to sense and input to the control unit the foregoing values, in particular the voltage values.

The control unit is preferably connected to gates of the corresponding switches to control their switching operation.

Preferably, the switches of the BBC, especially of the VSR and of the VSI, are transistors, preferably MOSFETs, IGBTs or FETs. The switches preferably respectively comprise body diodes or are connected to an anti-parallel discrete diode.

Preferably, the BBC is connected to a grid and to an electric motor, preferably a permanent-magnet synchronous motor (PMSM).

The present invention also comprises an electric motor, preferably a PMSM, comprising the BBC for conversion of input AC grid voltage, in particular for bidirectional conversion of input AC grid voltage and output AC load voltage.

The foregoing described preferable embodiments and configurations may be combined.

Further details, advantages, and features of the preferred embodiments of the present invention are described in detail with reference to the figures. Therein:

### Brief Description of the Drawings

Fig. 1 shows schematic diagrams (a) - (e) of multi-phase back-to-back converters according to embodiments of the present invention;
Fig. 2 shows an equivalent average circuit diagram for an exemplary switching period of the multi-phase back-to-back converter of the present invention;
Fig. 3 shows diagrams (a) and (b) for characteristic waveforms for different control schemes according to embodiments of the present invention;
Fig. 4 shows diagrams (a) to (h) for explaining control schemes according to embodiments of the present invention;
Fig. 5 shows detailed diagrams for explaining control schemes of Fig. 4 according to embodiments of the present invention;
Fig. 6 shows detailed diagrams for explaining control schemes of Fig. 4 according to embodiments of the present invention;
Fig. 7 shows detailed diagrams for explaining control schemes of Fig. 4 according to embodiments of the present invention;
Fig. 8 shows an exemplary logic structure of the control schemes and control unit according to embodiments of the present invention;
Fig. 9 shows diagrams of measurement results showcasing proof-of-concept of embodiments of the present invention; and
Fig. 10 shows diagrams of measurement results showcasing proof-of-concept of embodiments of the present invention.

### Description of the Embodiments

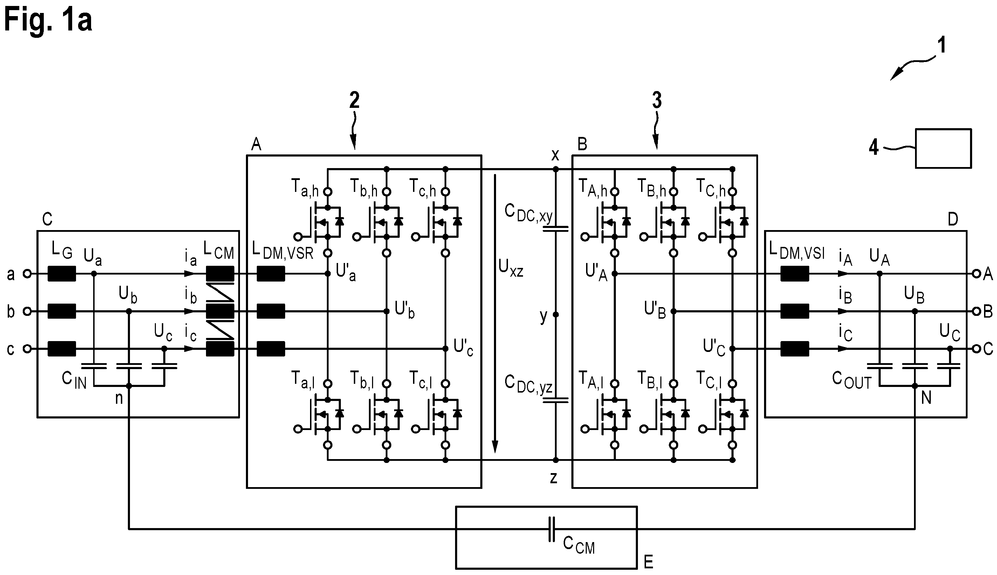

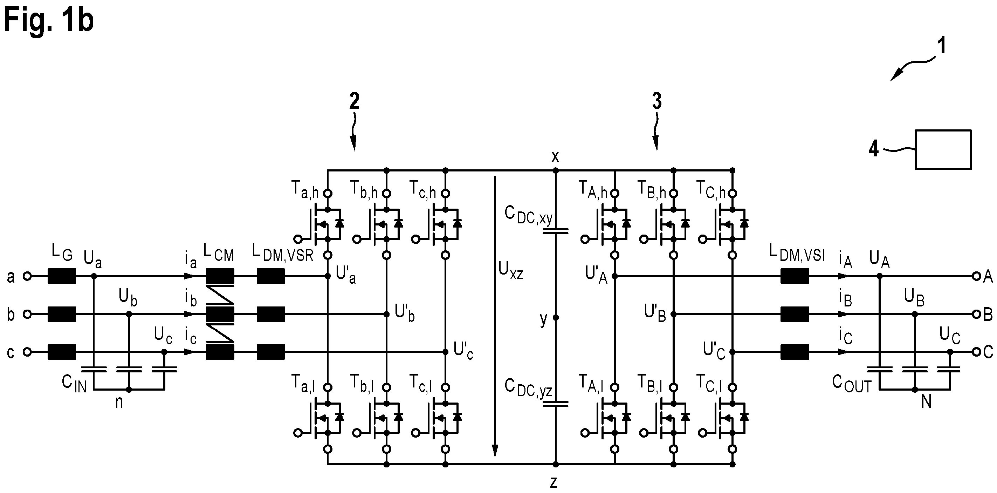

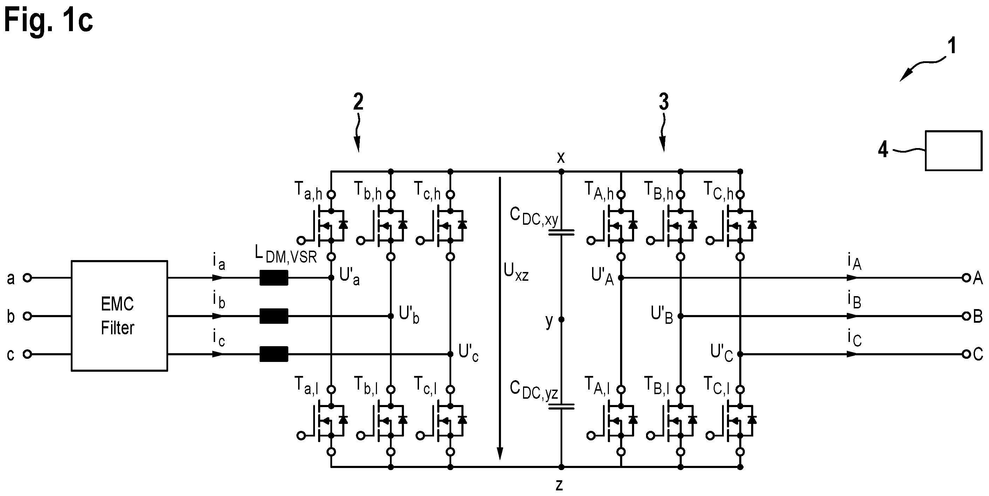

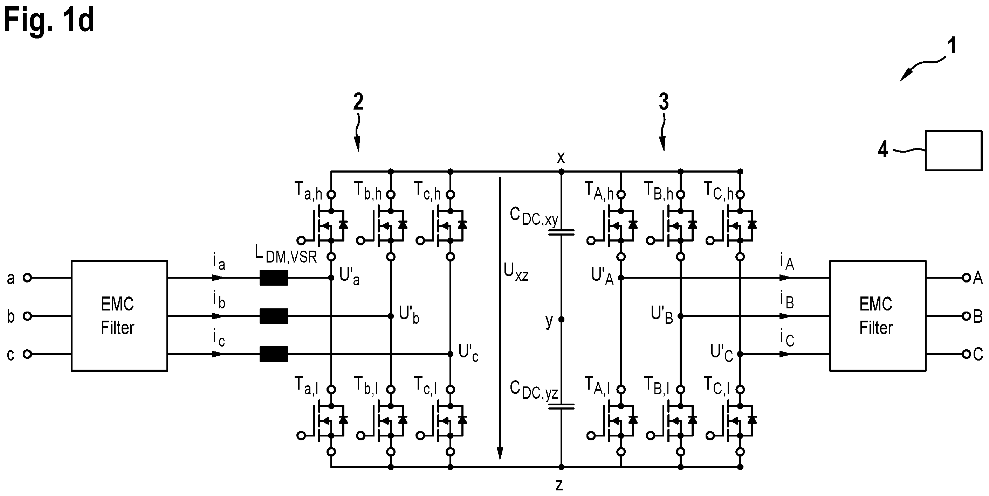

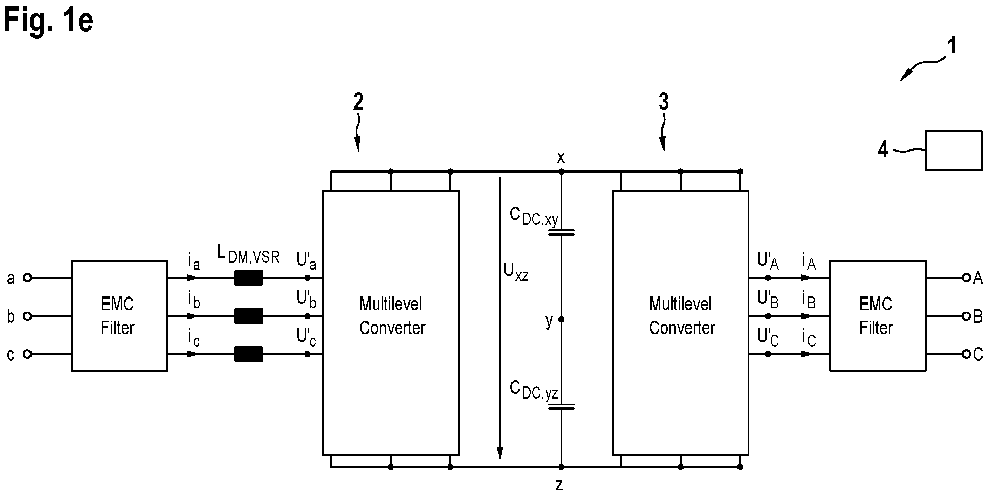

Embodiments of the present invention will be described with reference to Fig. 1 concerning device features and configurations. Therein, Fig. 1 shows schematic diagrams (a) - (e) of multi-phase back-to-back converters 1 (henceforth "BBC" 1) according to embodiments of the present invention wherein each of the diagrams (b) - (e) show modification examples of the BBC 1.

In the present embodiments, an exemplary three-phase BBC 1 will be discussed. As will also be discussed below, the BBC 1 is not principally limited to three-phase, but can also be four or more phase, particularly six-phase.

The BBC 1, as shown in Fig. 1(a), comprises a voltage source rectifier 2 (henceforth "VSR" or "rectifier stage"), box "A", that is connected to an AC input voltage with phases a, b, c.

The VSR 2 comprises a plurality of parallel rectifier half-bridges (at connection points of voltages u'ₐ, u'_{b}, u'_{c}) wherein each rectifier half-bridge comprises two series-connected rectifier switches T_{a,h} - T_{c,l}. The nomenclature is as follows. Half-bridges are identified via their connection to a phase a, b, c, their switches are identified via their half-bridge (connection to phase a, b, c) and via their placement within the half-bridge, i.e. high (h) and low (I).

The BBC 1 further comprises a voltage source inverter 3 (henceforth "VSI" or "inverter stage"), box "B" that is connected to a load (also referred to as "machine load") for AC output with phases A, B, C. The VSI 3 comprises a plurality of parallel inverter half-bridges (at connection points of voltages u'_{A}, u'_{B}, u'_{C}), each inverter half-bridge comprising two series-connected inverter switches T_{A,h} - T_{C,l}. The nomenclature for the VSI 3 is similar to that of the VSR 2, wherein the phases are capitalized (A, B, C for VSI 3, a, b, c, for VSR 2).

In this example, both the VSR 2 and the VSI 3 are respectively three-phase, i.e. N=3 in the following. However, the invention is not principally limited thereto. For instance, one of the VSR 2 and the VSI 3 can be six-phase, while the other is three-phase. In other words, the VSR 2 and the VSI 3 do not necessarily have the same number of phases, as long as each of them has at least three phases. In any case, the term "N-1" and "N-2" respectively refers to the stage 2, 3 that is being operated or referred to. The important aspect is that "N-1" means one half-bridge is clamped and that "N-2" means two half-bridges are clamped, irrespective of the total number of half-bridges of the respective stage 2, 3 (being at least three).

The BBC 1 comprises a DC-link C_{DC} connected in parallel between the VSR 2 and the VSI 3.

The BBC 1 comprises a control unit 4, configured to control switching of the rectifier switches T_{a,h} - T_{c,l} and of the inverter switches T_{A,h} - T_{C,l}. The control unit 4 is connected to gates of the switches T_{a,h} - T_{c,l} and T_{A,h} - T_{C,l}.

Furthermore, in the present example, as denoted by box "C", the BBC 1 comprises an input EMC filter, and as denoted by box "D", an output EMC filter. The BBC 1 also comprises a common mode (CM) reducing capacitor C_{CM}, shown in box "E".

The BBC 1 is preferably a Voltage Source Back-to-Back Converter 1, wherein the VSR 2 interfaces with the grid, while the VSI 3 drives the machine or load. A first-stage DM/CM EMC filter is considered. The CM capacitor C_{CM} acts as a short-circuit for high frequency between the input and the output, keeping most of the CM current circulating inside the BBC 1.

As shown in the modification examples of (b) - (e), different topologies and EMC filter configurations can be used in the present embodiment. In (b), an alternative topology without CM-reducing capacitor is shown. In (c), the VSI 3 can be connected directly to the machine terminals. In (d), a generic design of the input/output EMC filter is shown. In (e), switching cells can be replaced with multilevel topologies.

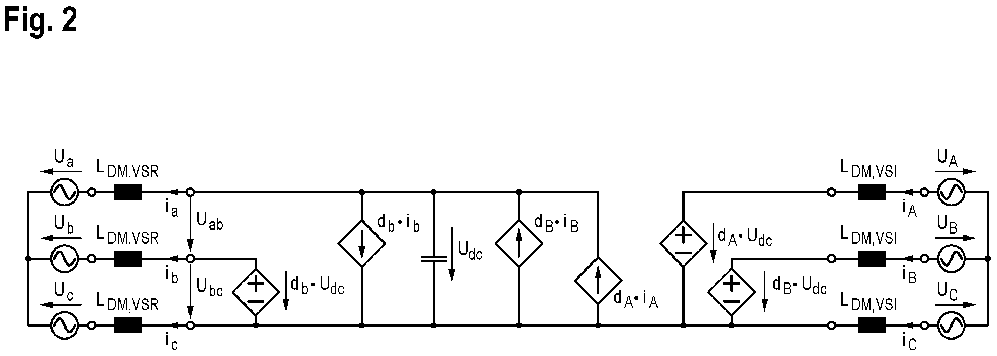

Now, with reference to Figs. 2 - 8, control schemes for operating the BBC 1 of the present embodiment will be explained.

The control unit 4 in the present embodiment is configured to drive one of the VSI 3 and VSR 2 with N-1 DPWM operation and the other with N-2 DPWM operation, and/or drive both the VSI 3 and the VSR 2 with N-2 DPWM operation. In the following, "leg" and "half-bridge" may be used interchangeably. The N-1 DPWM operation is defined as an operation in which one respective half-bridge (of the VSI 3 or VSR2 ) is clamped to a high-side or low-side rail of the DC-link or . The N-2 DPWM operation is defined as an operation in which two respective half-bridges (of the VSI 3 or VSR 2) are clamped to a high-side or low-side rail of the DC-link. In both the N-2 DPWM and the N-1 DPWM operations, only non-clamped half-bridge(s) are further switched by the control unit 4. "High-side rail" and "positive rail" may be used interchangeably, while "low-side rail" and "negative rail" may be used interchangeably. Furthermore, the N-1 DPWM modulation may also be referred to as "negative N-1 DPWM modulation" or "positive N-1 DPWM modulation", depending on whether clamping is performed to the positive rail or to the negative rail of the DC-link voltage. Alternating between the two may also be referred to as "positive-negative N-1 DPWM" or "negative-positive N-1 DPWM", depending on order of operation.

By driving one of the VSR 2 or VSI 3 (henceforth also "one of the stages", with "stage" referring to VSR 2 or VSI 3), with N-2 DPWM operation and driving the other with N-1 DPWM operation, the number of switching transitions during certain operation modes are minimized while ensure that the DC-link voltage is near or at a minimum possible level, thereby reducing switching losses and achieving high efficiency. Since one stage 2, 3 is driven with N-2 DPWM, and the other stage 3, 2 with N-1 DPWM, the present embodiment achieves during such operation mode a synergistic modulation/control between rectifier and inverter stages 2, 3 of the BBC 1, which makes use of degrees of freedom to reduce the overall switching losses of the BBC 1. In cases or operation modes in which both stages 2, 3 are driven respectively with N-2 DPWM, especially at equal voltages, advantageously high efficiency is attained.

In the present embodiments, an example of the BBC 1 being three-phase is shown. Therefore, the operation "N-2 DPWM" may also be referred to as "1/3 PWM", while the operation "N-1 DPWM" may also be referred to as "2/3 PWM", with "1/3" or "2/3" indicating the number of half-bridges further switching (i.e. non-clamped).

In the sense herein, the main idea behind the present modulation strategy is to minimize the number of switching transitions and ensure that the DC-link voltage is kept at the minimum possible level, thereby reducing switching losses.

In contrast, in a conventional modulation strategy based on discontinuous modulation patterns typically would have three half-bridges of each converter stage 2, 3, switching at the switching frequency at any given switching period. In other words, from the six legs of the BBC 1, all legs switch at each period of operation, three at the VSR 2 and three at the VSI 3 stage.

Herein, only three half-bridges of the BBC 1 do so (two of one stage and one of the other). This can be understood by looking at Fig. 2, where two AC three-phase systems (abc and ABC) have their currents controlled exemplarily by the controlled voltage and current sources that model the average behavior of the BBC 1. In this figure, the half-bridges connected to terminals c and C are exemplarily permanently connected to the negative rail of the DC-link, the half-bridge connected to terminal a is permanently connected to the positive rail of the DC-link and the other three half-bridges (connected to terminals b, A and B) switching at the switching frequency having duty cycle equal to db, dA and dB. It can be seen that three duty cycles (db, dA and dB) control three terminal voltages, while the DC-link voltage average follows the line-to-line voltage.

Thus, four voltages are defined across the AC terminals a,b,c, and A,B,C and this is sufficient to define the voltage difference seen by each inductor and finally synthesize the AC currents in all phases. As this strategy requires only one leg of a given stage 2, 3 to switch within an operation period, this stage 2, 3 is said to be under N-2 DPWM modulation. The other stage 2, 3 needs to have at least two legs switching within the same given period and this stage 2, 3 is said to be operating with the N-1 DPWM modulation. However, the possibility to switch one of the stages with 3/3 PWM modulation, i.e., switch three legs within an operation period, is also part of this invention and could help to reduce current ripples at one of the AC ports of the V-BBC.

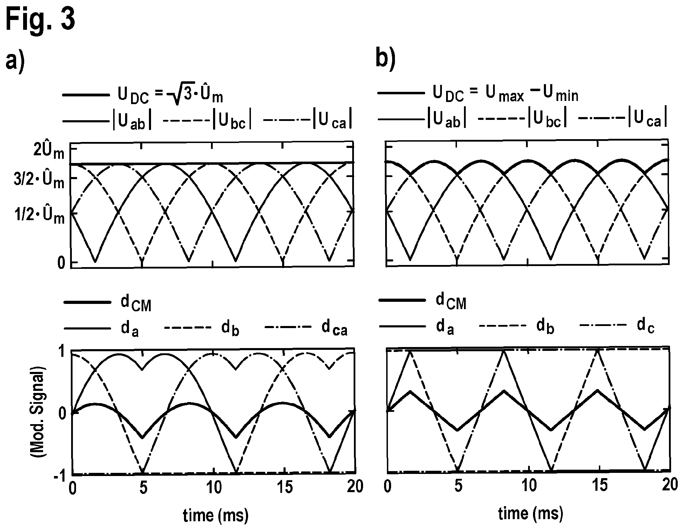

Fig. 3 shows diagrams (a) and (b) for characteristic waveforms for different control schemes according to embodiments of the present invention.

Therein, Fig. 3(a) shows N-1 DPWM modulation, where only two out of three half-bridges are switching. The half-bridge corresponding to the lowest phase voltage is clamped to the negative DC-link rail. Fig. 3(b) shows N-2 DPWM modulation, where only one half-half-bridge is switching. The DC-link voltage follows the envelope defined by the largest absolute phase-to-phase voltage.

More specifically, Fig. 3(a) illustrates the negative N-1 DPWM modulation with 120° clamping intervals at the negative DC-link rail, also known as DPWMMIN. At each operation period, only two out of the three phases are switching. This mode of operation ensures sinusoidal currents even though one leg is clamped since the three-phase currents sum to zero. Controlling two phases automatically shapes the third. For this mode of operation, as with any other PWM modulation using common mode (CM) injection, the minimum constant DC-link voltage required is equal to the maximum of the phase-to-phase voltage, $\sqrt{3} {\hat{U}}_{m}$ where *Û*ₘ is the peak of the phase-to-neutral voltage. For a negative N-1 DPWM modulation, the CM component, *d*_{CM}, added equally to all three modulation signals, presents no discontinuity. In contrast, in the positive and negative N-1 DPWM modulation, the CM component has discontinuities, leading to abrupt steps in the modulation signals, resulting in distortion of the current waveforms.

Exemplarily, the negative N-1 DPWM modulation is selected from the positive and negative N-1 DPWM modulation to further illustrate the present embodiment. In other words, during N-1 DPWM modulation, the following control configurations clamp to the negative rail of the DC-link voltage. Alternatively, positive N-1 DPWM may be performed and/or positive-negative or negative-positive N-1 DPWM may be performed.

Fig. 3(b) illustrates the N-2 DPWM modulation. Only one out of the three phases is switching over each switching period. This modulation features a variable DC-link voltage that follows the envelope of the largest absolute phase-to-phase voltage at one of the AC ports. In this case, the number of switching transitions is reduced, and the DC-link voltage is minimized while still ensuring sinusoidal currents, as long as the power injected into the DC-link by the other converter is constant. Consequently, this modulation strategy is highly advantageous for reducing switching losses and thus achieving high efficiency.

Now, an exemplary calculation method, carried out by the control unit, for achieving this modulation strategy will be explained. Herein, the terms "machine" and "load" may be used interchangeably.

A sinusoidal three-phase grid voltage *u*_{a,b,c} with $\begin{matrix}{u}_{j} = {\hat{U}}_{m} sin \left({ω}_{m}t-{θ}_{j}\right) , with j = a , b , c \\ {θ}_{a} = 0 , {θ}_{b} = \frac{2 π}{3} , {θ}_{c} = - \frac{2 π}{3} ,\end{matrix}$ (1) **where** *Û*ₘ **is** the amplitude of the grid phase voltage, ${\hat{U}}_{m} = \sqrt{2} ⋅ 230 V$, and *ω*ₘ = 2*πf*ₘ, where *f*ₘ = 50 Hz is the grid frequency. In the same manner, a sinusoidal load voltage *u*_{A,B,C} can be defined as: $\begin{matrix}{u}_{k} = {\hat{U}}_{o} sin \left({ω}_{o}t-φ-{θ}_{k}\right) , with k = A , B , C \\ {θ}_{A} = 0 , {θ}_{B} = \frac{2 π}{3} , {θ}_{C} = - \frac{2 π}{3} ,\end{matrix}$ (2) where *Û*ₒ is the amplitude of the load phase voltage *ω*ₒ = 2*πfₒ*, where *f*ₒ is the load fundamental electrical frequency, which can vary, for instance, based on a machine's operating point, and *φ* is an arbitrary angle displacement between the grid a, b, c and machine A, B, C three-phase voltages. These voltages may not only differ in frequency and amplitude but can also have any phase shift between them.

The present embodiment attains minimum switching losses by, in part, ensuring a minimum possible DC-link voltage *u_{xz}*.

In order to define it, the phase-to-neutral voltages of the grid are initially sorted into maximum and minimum values, *u*_{VSR,max} = max(*u*ₐ, *u*_{b}, *u*_{c}), *u*_{VSR,min} = min(*u*ₐ, *u*_{b}, *u*_{c}). The remaining phase is denoted as *u*_{VSR,mid}.

Similarly, for the phase-to-neutral machine voltages: *u*_{VSI,max} = max(*u*_{A}*, u*_{B}, *u*_{C}), *u*_{VSI,min} = min(*u*_{A}, *u*_{B}, *u*_{C}), with the remaining phase denoted as *u*_{VSI,mid}.

The six-pulse shape waveforms are then calculated using the equations
*u*_{VSR,13} = *u*_{VSR,max} - *u*_{VSR,min}, and
*u*_{VSI,13} = *u*_{VSI,max} - *u*_{VSI,min}, respectively.

The final DC-link voltage should be selected as the maximum of these two values: ${u}_{xz} = max \left({u}_{VSR , 13}, {u}_{VSI , 13}\right) .$ (3)

The converter stage 2, 3, that interfaces with the AC side having the highest instantaneous phase-to-phase voltage operates with N-2 DPWM modulation, and the DC-link voltage follows the six-pulse shape waveform of the corresponding voltage. The other converter stage 2, 3 operates with negative N-1 DPWM modulation, but not with a constant DC-link voltage.

Instead, it uses the varying DC-link voltage defined by the AC side with the highest phase-to-phase voltages. Thus, when the grid voltage exceeds the load voltage, the VSR 2 operates with N-2 DPWM modulation. Conversely, when the load voltage is higher, the VSI 3 operates with N-2 DPWM modulation.

In a transition region, where the grid and load voltages are nearly identical in amplitude, i.e., when the *u*_{VSR,13} and *u*_{VSI,13} quantities intersect, the DC-link voltage switches from one quantity to the other, ensuring it always follows the maximum. As a result, the VSR 2 and VSI 3 operations continuously alternate between 1/3 and negative N-1 DPWM modulation.

The CM component injection for both N-2 DPWM operation and negative N-1 DPWM modulation can be represented with a single equation, ensuring a smooth transition between these two modes of operation. ${d}_{VSR - I , CM} = \frac{{u}_{VSR - I , min}}{\frac{{u}_{xz}}{2}} - 1 .$ (4)

Adding this CM component to the duty cycles for both converter stages 2, 3 results in: $\begin{matrix}{d}_{VSR - I , max} = \left({u}_{VSR - I , max}\right) / \left({u}_{xz}/2\right) + {d}_{VSR - I , CM} , \\ {d}_{VSR - I , mid} = \left({u}_{VSR - I , mid}\right) / \left({u}_{xz}/2\right) + {d}_{VSR - I , CM} , \\ {d}_{VSR - I , min} = \left({u}_{VSR - I , min}\right) / \left({u}_{xz}/2\right) + {d}_{VSR - I , CM} ,\end{matrix}$ (5) where *d*_{VSR-I,max}, *d*_{VSR-I,mid}, *d*_{VSR-I,min} are the corresponding duty cycles to the half-half-bridge leg connected to the maximum, middle, and minimum phase-to-neutral voltage, for the VSR 2 or the VSI 3 ("VSR-I" to be understood as either VSR or VSI).

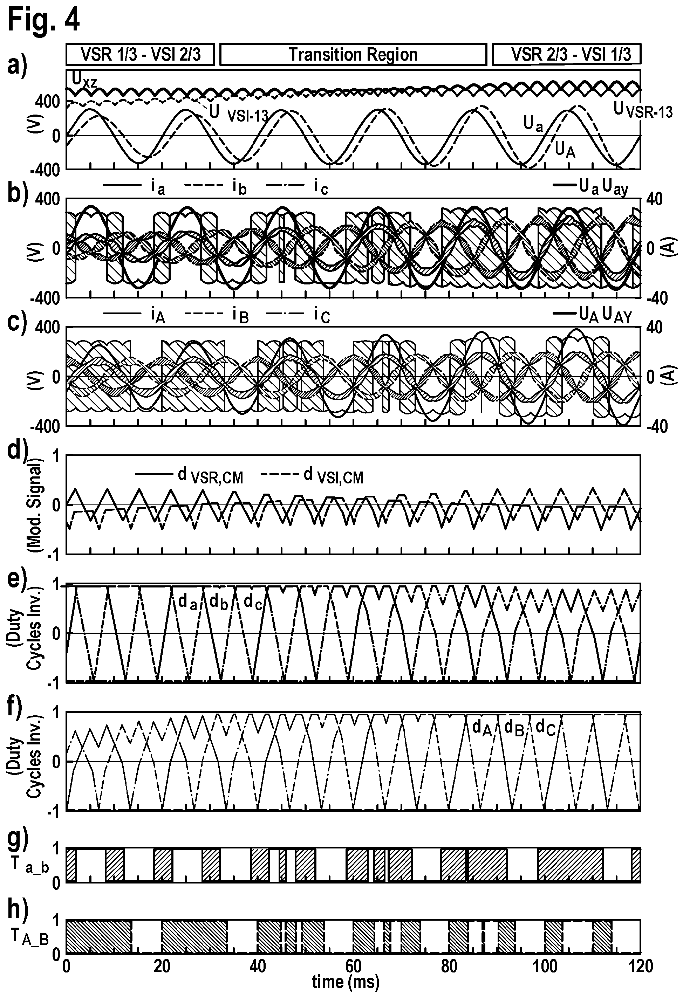

Now, with view on Figs. 4 - 7, resulting waveforms, voltages and switching signals will be discussed.

In particular, Fig. 4 shows an overview in which with increasing time, first the VSR 2 is driven with N-2 DPWM (0 ms to roughly 40 ms), then a transition operation is carried out during a transition region (40 ms to roughly 80 ms), and then the VSI is driven with N-2 DPWM modulation (following 80 ms, especially to roughly 120 ms).

Therein, (a) shows the phase-to-neutral voltages on the grid and machine sides, as well as the quantities *u*_{*VSR*,13} and *u*_{*VSI,*13}. The DC-link voltage follows the envelope of the maximum of these two quantities at each point in time. (b) shows the switching voltage of the VSR 2 along with the grid currents, which are sinusoidal and in phase with the grid voltage, ensuring a unity power factor. (c) presents the switching voltage of VSI 3 and the output currents. (d) displays the CM modulation signals for the VSR 2 and the VSI 3. For the simulation, a resistive load of 20 Ω is considered; the power is increasing from 4 to 11 kW, *fₒ* = 50 *Hz* and there is a 30° phase-shift between grid and machine phase-to-neutral voltages

When the grid voltage is higher than the load voltage, the DC-link voltage follows the six-pulse shape envelope of the grid. As a result, the switching voltage of the VSR 2 is clamped for a total of 240° of the fundamental period to either the positive or negative DC-link rail (Fig. 3(b)), while the switching voltage of the VSI 3 is clamped for 120° to the negative DC-link rail (Fig. 3(c)). The opposite pattern occurs when the machine voltage exceeds the grid voltage. In the transition region, where *u*_{VSR,13} and *u*_{VSI,13} intersect, the DC-link voltage is set to the maximum of these values at each instant in time. The converter stage 2, 3 with the highest AC side voltage operates with N-2 DPWM modulation, while the other stage 2, 3 operates with negative N-1 DPWM modulation.

This approach maximizes using the N-2 DPWM modulation, ensuring the minimum number of switching transitions and the lowest possible DC-link voltage. The grid currents are sinusoidal and in phase with the grid voltage, ensuring a unity power factor. Other power factors can also be achieved by properly changing the power or current reference signals. The currents supplied to the load are also sinusoidal, with amplitude and frequency depending on the load operating point. In the presented control configuration, a resistive load is used, meaning the machine current and voltage are in phase, which is typical for the preferable application of PMSM machines that operate close to the unity power factor.

Fig. 4(d) presents the calculated CM injection signals, *d*_{VSR,CM} and *d*_{VSI,CM}, for both VSR 2 and VSI 3, calculated by the control unit 4 as explained above.

Fig. 4(e) shows duty cycles for the VSR 2 ("duty cycles rectifier" / in figure: "Duty Cycles Rect."), while Fig. 4(f) shows duty cycles for the VSI 3 ("duty cycles inverter" / in figure: "Duty Cycles Inv.").

Further, Fig. 4(g) shows switching signals for T_{a,h}, i.e. high-side switch of one leg of the VSR 2, and Fig. 4(h) correspondingly shows switching signals for T_{A,h}, i.e. high-side switch of one leg of the VSI 3. During the shown "hatched blocks" of the switch being ON, i.e. "1", this is to be understood as being a region in which the switch is switched with high frequency, i.e. not clamped. These are shown as "hatched blocks" due to the high frequency of switching in comparison to the time-frame of N-2 DPWM operation - transition region - N-1 DPWM operation. Further, regions connected by a constant "1", i.e. ON signal (bold line) are to be understood as clamped to ON (where they connect the hatched regions, i.e. between hatched regions but not the hatched regions themselves). As can be seen when comparing 4(e) with 4(f) or 4(g) with 4(h), when the VSR 2 is operated at N-2 DPWM operation, i.e. only one leg switching, its average duty cycle is larger than that of the VSI 3 operated at N-1 DPWM operation. In other words, the average duty cycle is larger during N-2 DPWM operation than during N-1 DPWM operation.

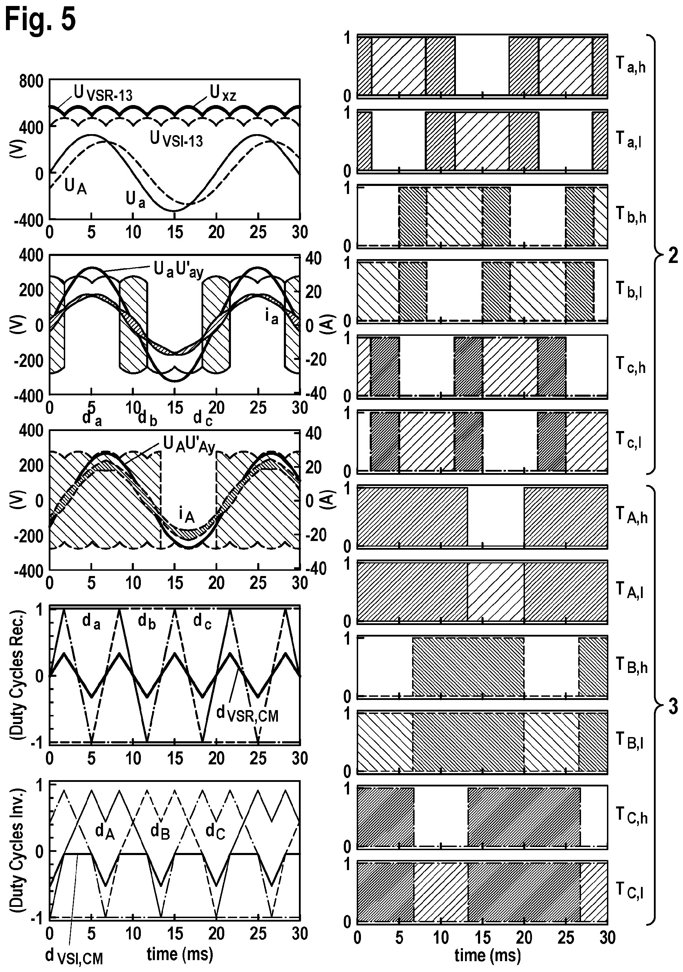

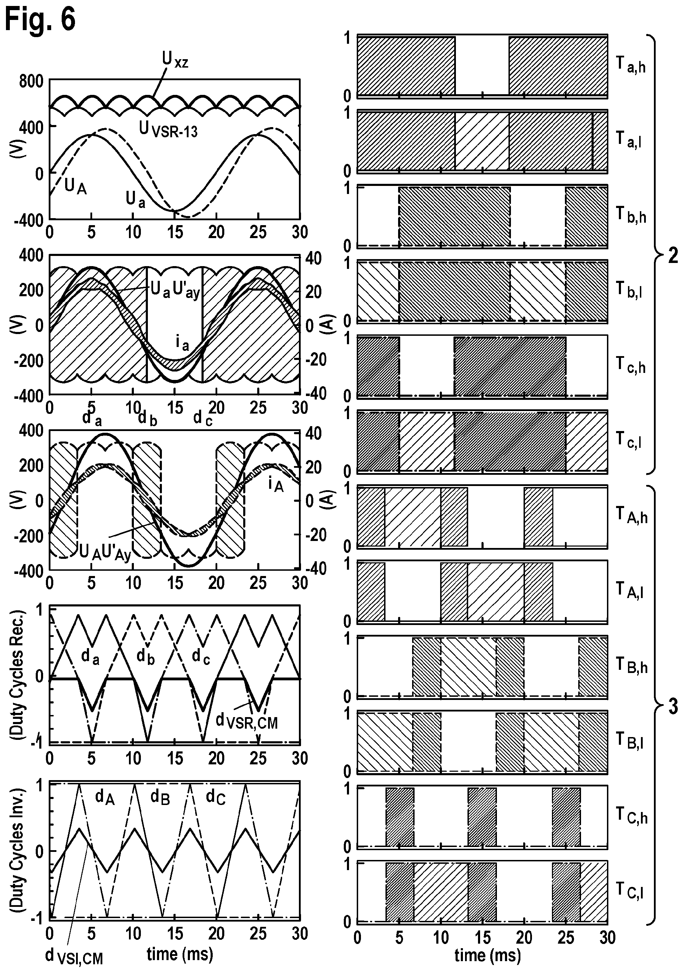

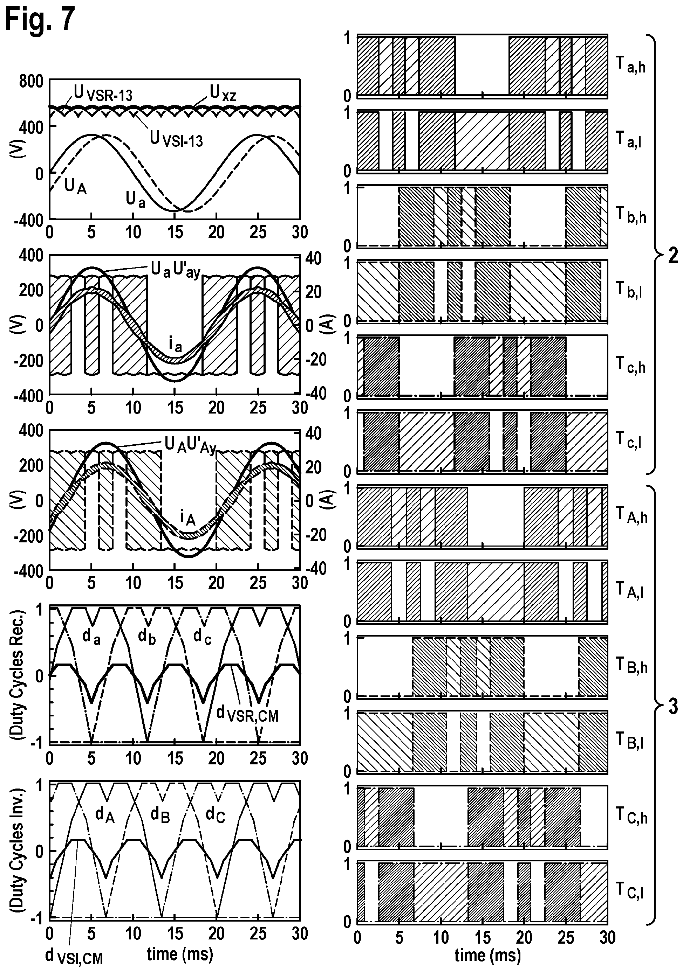

Figs. 5, 6, and 7 show detailed views of the diagrams of Fig. 4. In particular, Fig. 5 shows the corresponding diagrams for operation of VSR 2 at N-2 DPWM and VSI 3 at N-1 DPWM (first time portion of Fig. 4), Fig. 6 shows the corresponding diagrams for operation of VSR 2 at N-1 DPWM and VSI 3 at N-2 DPWM (last time portion of Fig. 4), and Fig. 7 shows the corresponding diagrams for the transition region (middle time portion of Fig. 4).

Furthermore, each of Figs. 5, 6, and 7 show switching signals for all switches of the VSR 2 and of the VSI 3.

Therein, as with Fig. 4, small or finer hatching corresponds to switching between ON and OFF with high frequency, while large or coarse hatching corresponds to clamping, in which the corresponding switch is constantly ON.

As can be taken from Fig. 5, during which the VSR 2 operates at N-2 DPWM and the VSI 3 operates at N-1 DPWM, two switches of the VSR 2 are clamped, i.e. ON, while one switch of the VSI 3 is clamped, i.e. ON.

For example, starting at time 0 ms, the switches T_{b,l} and T_{c,h} of the VSR 2 are clamped (coarse hatching), with the switches T_{a,h} T_{a,l} switching (finer hatching) and the remaining switches OFF (being of the clamped half-bridges b, c to prevent short-circuit). Then (at roughly 2 ms), switches T_{a,h} is clamped and T_{b,l} is held clamped, with T_{c,h} and T_{c,l} switching. At roughly 5 ms, switch T_{a,h} is further held clamped while T_{c,l} is clamped, with T_{b,h} and T_{b,l} switching, and so on.

During this, starting at 0 ms, of the VSI 3, T_{B,l} is clamped, with T_{A,h}, T_{A,l} and T_{C,h} T_{C,l} switching. At roughly 7 ms, T_{C,l} is clamped, with T_{A,h} T_{A,l} T_{B,h} T_{B,l} switching. At roughly 14 ms, T_{A,l} is clamped, with T_{B,h} T_{B,l} T_{C,h} T_{C,l} further switching.

In this configuration, during N-1 DPWM modulation of the VSI 3, the low-side switches are clamped. In other words, clamping is performed with respect to the negative rail of the DC-link voltage, hence "negative N-1 DPWM operation". In a corresponding "positive N-1 DPWM operation", clamping would be performed via the high-side switches to the positive rail of the DC-link voltage.

Fig. 6, as stated above, shows the corresponding diagrams for operation of the VSR 2 at N-1 DPWM modulation, particularly negative N-1 DPWM modulation, with the VSI 3 being operated at N-2 DPWM modulation. As can be seen therefrom, the respective control scheme for N-2 DPWM operation or N-1 DPWM operation is equivalent to that of Fig. 5, such that a repeated discussion thereof is omitted.

Fig. 7 demonstrate the transition region. As can be taken therefrom, the VSR 2, initially operated at N-2 DPWM operation, and the VSI 3, initially operated at N-1 DPWM operation (i.e. starting with Fig. 5), are operated similarly to one another. Therein, following along for example the switching operations of the VSR 2, i.e. T_{a,h} T_{a,l} T_{b,h}, T_{b,l} T_{c,h} T_{c,l}, periods of N-2 DPWM operation, i.e. two switches clamped, alternate with periods of N-1 DPWM operation. At 0 ms, the VSR 2 is operated at N-2 DPWM operation (clamped b and c). At 1 ms, the VSR 2 is operated at N-1 DPWM, also referred to as 2/3 DPWM, operation (clamped b, switching a, c), at roughly 2.5 ms, N-2 DPWM, also referred to as 1/3 DPWM, operation (a, b clamped), and so on.

As a comparison with the switching signals of the VSI 3 shows, the VSI 3 performed N-2 DPWM operation when the VSR 2 performs N-1 DPWM operation, and vice versa.

During the transition region, the time periods of the VSR 2 operating at N-1 DPWM operation gradually increase, while the time periods of the VSI 3 operating at N-2 DPWM operation gradually increase, until the VSR 2 operates fully at N-1 DPWM and the VSI 3 operates fully at N-2 DPWM operation, as shown in Fig. 6.

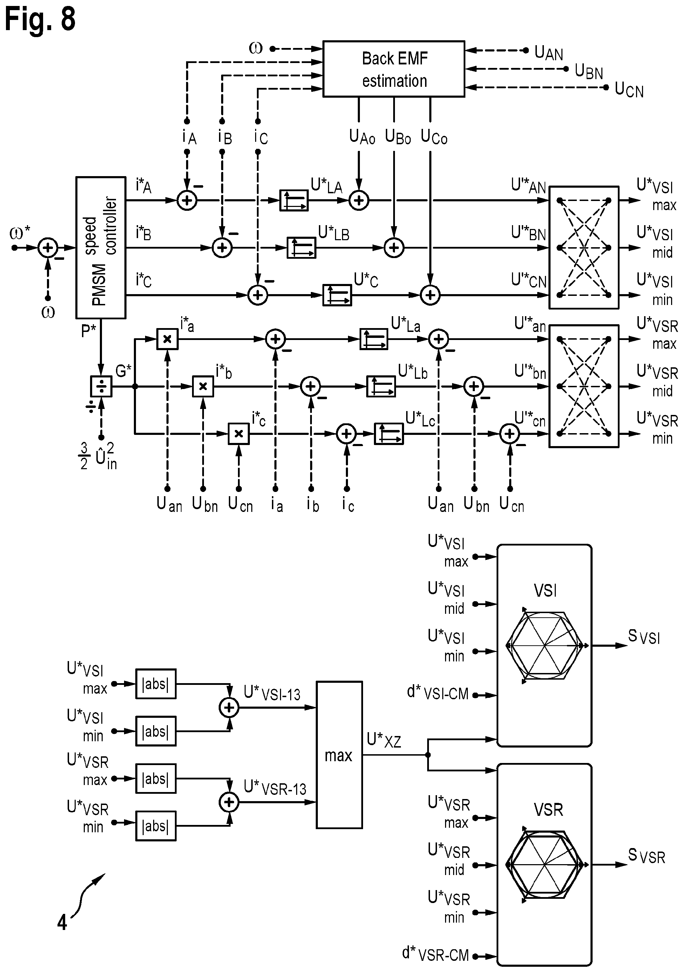

Fig. 8 shows an exemplary logic structure of the control schemes and control unit 4 according to embodiments of the BBC 1, especially in an application of a PMSM.

The input is the reference speed of the load / machine, *ω**. A speed-torque controller determines the machine currents, ${i}_{A , B , C}^{*}$ and the power reference *P**. The output currents are controlled through P-controllers; the estimated back-EMF voltages are added to their outputs, resulting in the average voltage being synthesized by the VSI. The power reference *P**, together with the amplitude of the grid voltage, defines the transconductance *G**. By multiplying this with the grid voltages, the references for the grid currents are obtained. These currents are in phase with the grid voltage, resulting in a unitary power factor. P-controllers estimate the necessary LF voltages across the input boost inductors; adding the measured grid voltages yields the average voltage to be synthesized by the VSR. Both VSR and VSI average voltages are sorted into maximum, middle, and minimum values. The *u*_{*VSR,*13}, *u*_{*VSI,*13} references are generated, and the maximum of these defines the DC-Link voltage reference, ${u}_{xz}^{*}$. Finally, the duty cycles are calculated within the respective modulators.

For achieving advantageous operation, shaping of the DC-link voltage, *u*_{xz}, to follow the maximum value of the VSR 2 and VSI 3 six-pulse shape waveforms is performed. Initially, the reference angular speed, *ω**, is compared with the actual speed *ω*; a speed-torque control unit estimates the machine reference currents, ${i}_{A , B , C}^{*}$, and the power reference *P**. The power reference, along with grid voltage amplitude, is used to estimate the transconductance *G**. The input current reference is derived by multiplying this transconductance with the measured grid voltages. A P-controller ensures that the input currents remain sinusoidal and in phase with the grid voltage, thus achieving, exemplarily, unity power factor. The reference average voltages at the VSR switching node are estimated, $u {′}_{an , bn , cn}^{*}$. Similarly, a P-controller shapes the output currents; the estimated back-EMF voltages are added to their outputs, resulting in the average voltage synthesized by the VSI, $u {′}_{AN , BN , CN}^{*}$. By sorting $u {′}_{an , bn , cn}^{*}$ and $u {′}_{AN , BN , CN}^{∗}$ into maximum, middle, and minimum values, the *u*_{VSR,13} and *u*_{VSI,13} references are calculated. The maximum of these two values determines the DC-link voltage reference, ${u}_{xz}^{∗}$. This DC-link voltage reference, along with the switching node average voltage references and the CM components defines the duty cycles.

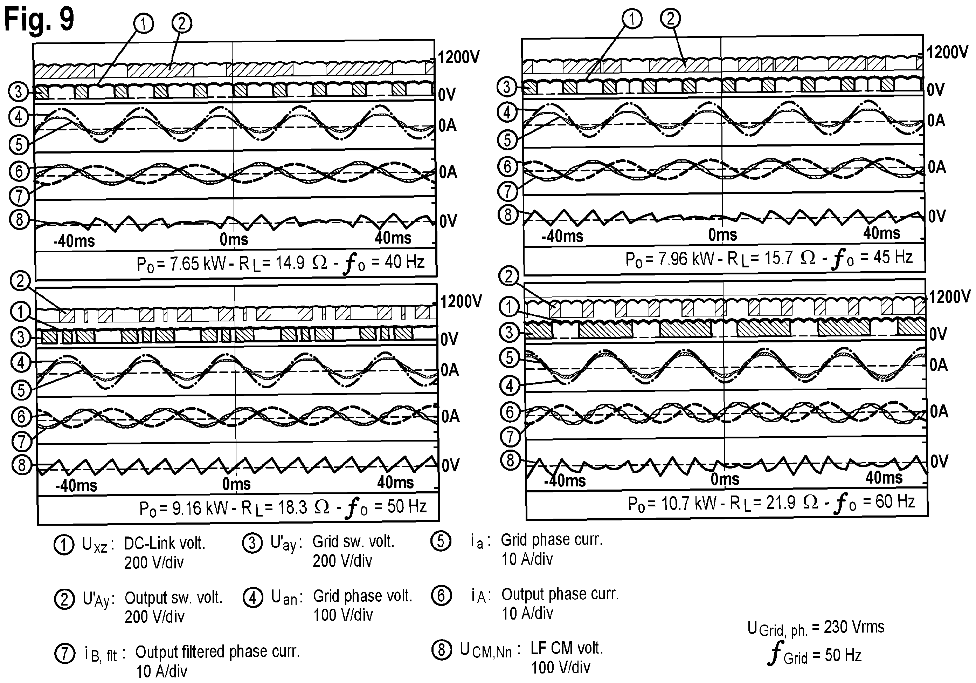

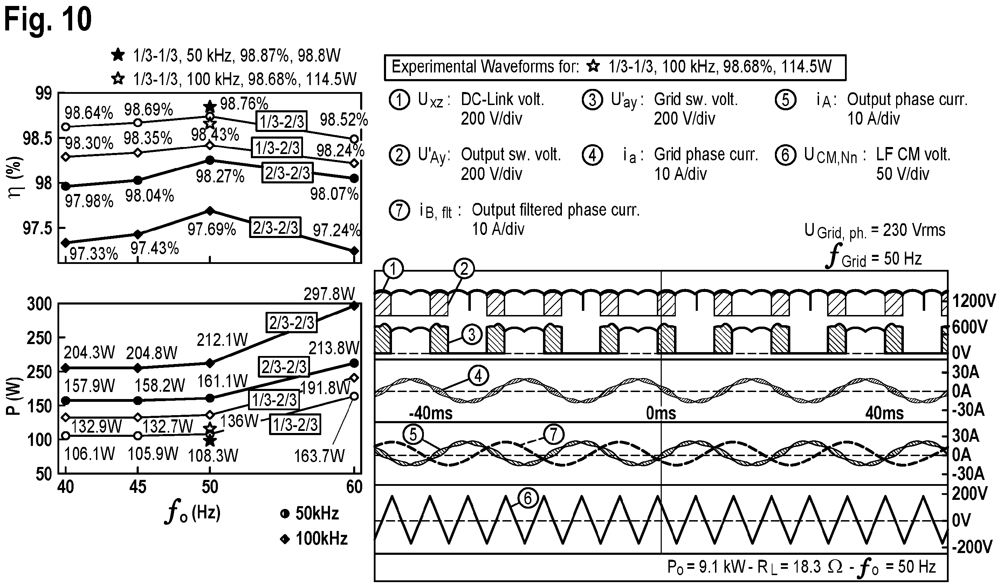

Figs. 9 and 10 respectively show diagrams of measurement results showcasing proof-of-concept of embodiments of the present invention.

Fig. 9 shows experimental waveforms of the BBC 1 with the synergetic control of the present embodiment for four different operation points: 40, 45, 50, and 60 Hz output frequency. As the output frequency increases, the output power increases proportionally. For 40 and 45 Hz, the VSR 2 operates with N-2 DPWM modulation and the VSI 3 with negative N-1 DPWM modulation. The DC-link voltage follows the six-pulse waveform of the grid. At 50 Hz, the grid and machine voltages have the same amplitude and frequency, but the phase shift between them is arbitrary; then the VSR 2 and VSI 3 switch back and forth between 1/3 and negative N-1 DPWM modulation continuously, and the DC-link voltage follows the envelope of the maximum six-pulse shape waveform at each point in time. At 60 Hz, the VSI 3 operates with N-2 DPWM modulation, while the VSR 2 uses negative N-1 DPWM modulation. In all cases, the grid current is in phase with the grid voltage, ensuring unity power factor. The switching frequency is 100 kHz. The resistive load used in each case was chosen to approximate the machine operating point as closely as possible, based on available laboratory resistors.

In particular, Fig. 9 showcases experimental waveforms from a hardware prototype at various operating points with the corresponding output frequency *f*ₒ, output power *P*ₒ and resistive load *R*_{L} indicated for each case. The switching frequency is set to 100 kHz. For 40 and 45 Hz output frequencies, the grid voltage is higher than the output voltage, and thus the DC-link voltage is determined by the six-pulse shape waveform of the grid voltage. The VSR 2 operates with N-2 DPWM modulation, and the VSI 3 operates with negative N-1 DPWM modulation. The amplitude of the grid current *i*ₐ is controlled based on the power to be transferred and remains in phase with the grid voltage, ensuring a close-to-unity power factor. The output current, *i*_{A}, which drives the load, is also predominantly sinusoidal. After filtering through the output DM capacitors, it appears as a clean sine wave. The LF CM voltage *u*_{CM,Nn}, measured across the CM capacitor *C*_{CM}, is also presented. Additionally, since negative N-1 DPWM modulation is used, this LF CM voltage varies smoothly without abrupt changes. The HF CM voltage is contained across the CM choke on the input side. For 50 Hz output frequency, the output voltage has the same amplitude as the grid voltage, so the DC-link voltage is determined by the maximum of the six-pulse waveforms of the grid and output voltages at each point in time. As a result, the converter stages 2, 3 alternate continuously between N-2 DPWM operation and negative N-1 DPWM operation, minimizing switching transitions and maintaining the lowest possible DC-link voltage, resulting in the highest efficiency. Finally, for 60 Hz output frequency, the output voltage exceeds the input voltage, thus defining the DC-link voltage. The VSI 3 operates with N-2 DPWM modulation, and the VSR 2 with negative N-1 DPWM modulation.

Fig. 10 shows measured efficiency and loss curves, showing efficiency and losses versus output frequency *f*ₒ, representing different operating points. The black line represents the conventional modulation where both converter stages 2, 3 operate with negative N-1 DPWM modulation at a 100 kHz switching frequency. The gray line corresponds to the proposed modulation, also at 100 kHz switching frequency. The blue and light blue lines show the conventional and proposed modulation, respectively, at a 50 kHz switching frequency. For the proposed modulation, the DC-Link voltage follows the envelope of the maximum six-pulse waveforms, whereas in the conventional modulation, the DC-Link voltage remains constant with a +15% margin above the minimum value of $\sqrt{3} ⋅ max \left({\hat{U}}_{m}, {\hat{U}}_{o}\right)$, i.e., *U_{xz}* ≈ 650 *V* for 40, 45, and 50 Hz, and *U_{xz}* ≈ 800 V for 60 Hz. However, for the negative N-1 DPWM - N-1 DPWM (also referred to as 2/3 - 2/3 DPWM operation) modulation experiment at 60 Hz output frequency and 50 kHz switching frequency, the DC-Link voltage was *U_{xz}* ≈ 750 V and not *800 V*. Additionally, the efficiency and losses for the special case of N-2 DPWM - N-2 DPWM modulation (i.e. both the VSR 2 and VSI 3 being operated simultaneously with N-2 DPWM operation) are highlighted with a star. An experimental waveform of the converter for this mode of operation, 100 kHz switching frequency, is also shown.

In particular, Fig. 10 showcases efficiency and loss measurements for the present synergetic control compared with conventionally known control, where both converter stages operate with negative N-1 DPWM modulation and a constant DC-link voltage. Results are shown for switching frequencies of both 100 kHz and 50 kHz. The black/gray lines represent the 100 kHz operation points. For the conventional mode, at operation point with frequencies 40, 45, and 50 Hz, the DC-link voltage is kept constant at 650 V, which includes a +15 % margin above the minimum value of $\sqrt{3} ⋅ max \left({\hat{U}}_{m}, {\hat{U}}_{o}\right)$. For 60 Hz operation, the DC-link voltage is constant at 800 V (for 50 kHz switching frequency, the DC-link voltage was 750 V, not 800 V), which also includes a +15% margin. Across all these points, the proposed synergetic modulation nearly halves the losses compared to the conventional method. Efficiency peaks at 50 Hz operation for 100 kHz switching frequency, reaching 98.43%, where maximum clamping of the switching cells of the VSR 2 and VSI 3 occurs, with both converters alternating between N-2 DPWM and negative N-1 DPWM modulation. Additionally, for 100 kHz switching frequency, N-2 DPWM modulation has also been implemented for both converters (waveforms shown in Fig. 9). In this scenario, the efficiency reaches 98.68%, with total measured losses of only 114.5 W for the entire system. At 50 kHz, efficiency is even higher.

By the foregoing described embodiments, a multi-phase back-to-back converter 1 is achieved which provides reduced overall switching losses and preferably reduced switching loss of individual stages thereof, achieves a synergetic modulation/control between rectifier 2 and inverter stages 3 of the converter 1, which makes use of degrees of freedom to reduce the overall switching losses, preferably in addition to those of the individual stages.

In addition to the foregoing written explanations, it is explicitly referred to figures 1 to 10, wherein the figures in detail show circuit diagrams, configuration examples, and control schemes of the invention.

### List of Reference Numerals

- 1: Multi-phase back-to-back converter (BBC)
- 2: voltage source rectifier (VSR)
- 3: voltage source inverter (VSI)
- 4: control unit
- T_{a,h} - T_{c,l}: rectifier switches
- T_{A,h} - T_{C,l}: inverter switches
- C_{DC}: DC-link

## Claims

1. Multi-phase back-to-back converter (1), henceforth BBC (1), wherein a number of phases is equal to or larger than three; comprising:
a voltage source rectifier (2), henceforth VSR (2), connected to an AC input voltage and comprising a plurality of parallel rectifier half-bridges, each rectifier half-bridge comprising two series-connected rectifier switches (T_{a,h} - T_{c,l});
a voltage source inverter (3), henceforth VSI (3), connected to a load for AC output, and comprising a plurality of parallel inverter half-bridges, each inverter half-bridge comprising two series-connected inverter switches (T_{A,h} - T_{C,l});
a DC-link (C_{DC}) connected between the VSR (2) and the VSI (3); and
a control unit (4), configured to control switching of the rectifier switches (T_{a,h} - T_{c,l}) and of the inverter switches (T_{A,h} - T_{C,l}); wherein
the control unit (4) is configured to drive one of the VSI (3) and VSR (2) with N-1 DPWM operation and the other with N-2 DPWM operation and/or drive both with N-2 DPWM operation, with N-1 DPWM operation being defined as an operation in which one respective half-bridge is clamped to a high-side or low-side rail of the DC-link (C_{DC}), and N-2 DPWM operation being defined as an operation in which two respective half-bridges are clamped to a high-side or low-side rail of the DC-link (C_{DC}), with in both of N-2 DPWM and N-1 DPWM only the switches (T_{a,h} - T_{c,l}, T_{A,h} - T_{C,l}) of the non-clamped half-bridge(s) switching.

2. Multi-phase BBC (1) according to claim 1, wherein the control unit (4) is configured to drive the VSR (2) or the VSI (3) having a highest instantaneous phase-to-phase voltage, among all phase-to-phase voltages of the VSR (2) and of the VSI (3), with N-2 DPWM operation.

3. Multi-phase BBC (1) according to any one of the foregoing claims, wherein the control unit (4) is configured to drive the VSI (3) and the VSR (2) respectively with N-1 DPWM or N-2 DPWM simultaneously.

4. Multi-phase BBC (1) according to any one of the foregoing claims, wherein the control unit (4) is configured to selectively change between operation modes of which of the VSI (3) and the VSR (2) is being driven with N-1 DPWM and which is driven with N-2 DPWM and/or an operation mode of both the VSR (2) and the VSI (3) being driven with N-2 DPWM operation.

5. Multi-phase BBC (1) according to any one of the foregoing claims, wherein the control unit (4) is configured to drive the switches (T_{a,h} - T_{c,l}, T_{A,h} - T_{C,l}) of the non-clamped half-bridges of the VSI (3) and the VSR (2) during N-2 DPWM with a longer average duty cycle than during N-1 DPWM.

6. Multi-phase BBC (1) according to claim 4 or claim 5, wherein the control unit (4) is configured to carry out a transition operation of transitioning between which of the VSI (3) and the VSR (2) is driven with N-1 DPWM and which is driven with N-2 DPWM.

7. Multi-phase BBC (1) according to claim 6, wherein the control unit (4) is configured to, during the transition operation for transitioning from N-2 DPWM to N-1 DPWM, gradually decrease an average duty cycle of the switches (T_{a,h} - T_{c,l}, T_{A,h} - T_{C,l}) of the non-clamped half-bridge(s) of the respective VSI (3) or VSR (2).

8. Multi-phase BBC (1) according to claim 6 or claim 7, wherein the control unit (4) is configured to, during the transition operation for transitioning from N-1 DPWM to N-2 DPWM, gradually increase an average duty cycle of the switches (T_{a,h} - T_{c,l}, T_{A,h} - T_{C,l}) of the non-clamped half-bridge(s) of the respective VSI (3) or VSR (2).

9. Multi-phase BBC(1) according to any one of the foregoing claims, wherein the control unit (4) is configured to, during N-2 DPWM and N-1 DPWM operation, switch or permute which half-bridge(s) of the VSI (3) and the VSR (2) are respectively clamped and non-clamped.

10. Multi-phase BBC (1) according to any one of the foregoing claims, wherein the control unit (4) is configured to, during N-2 DPWM operation, clamp the half-bridge with the highest voltage among the half-bridges of the VSI (3) or VSR (2) to the high-side rail and clamp the half-bridge with the lowest voltage among the half-bridges of the VSI (3) or VSR (2) to the low-side rail.

11. Multi-phase BBC (1) according to any one of the foregoing claims, wherein the control unit (4) is configured to, during the N-1 DPWM operation, clamp the half-bridge with the highest voltage among the half-bridges of the VSI (3) or VSR (2) to the high-side rail or clamp the half-bridge with the lowest voltage among the half-bridges of the VSI (3) or VSR (2) to the low-side rail.

12. Multi-phase BBC (1) according to any one of the foregoing claims, wherein
the parallel rectifier half-bridges of the VSR (2) are denoted a, b, c,..., J ∈ j, J being a number of the parallel rectifier half-bridges, wherein the series-connected rectifier switches (T_{a,h} - T_{c,l}) of each rectifier half-bridge are denoted jh and jl;
the parallel inverter half-bridges of the VSI are denoted A, B, C,..., K ∈ k, K being a number of the parallel inverter half-bridges, wherein the series-connected inverter switches (T_{A,h} - T_{C,l}) of each inverter half-bridge are denoted kh and kl;
the DC-link (C_{DC}) voltage is denoted Uxz; and
wherein the control unit (4) is configured to control switching of the rectifier switches jh, jl and of the inverter switches kh, kl based on AC phase-to-neutral input voltages Ua, Ub, Uc,..., E Uj of respective voltages of input phases, and AC phase-to-neutral load voltages UA, UB, UC,..., ∈ Uk of respective voltages of load phases, the control unit (4) being further configured to:
calculate a maximum phase-to-neutral input voltage Uvsrmax = max (Uj) and a minimum phase-to-neutral input voltage Uvsrmin = min (Uj), remaining phase-to-neutral input voltages being Uvsrmid = Ua, Ub, Uc,..., ∉ Uvsrmax v Uvsrmin; and
calculate a maximum phase-to-neutral load voltage Uvsimax = max (Uk) and a minimum phase-to-neutral input voltage Uvsimin = min (Uk), remaining phase-to-neutral input voltages being Uvsimid = UA, UB, UC,..., ∉ Uvsimax v Uvsimin.

13. Multi-phase BBC (1) according to claim 12, wherein the control unit (4) is further configured to:
calculate rectified shape waveforms, especially in three-phase N=3 calculate six-pulse shape waveforms, using the values Uvsrrect = Uvsrmax - Uvsrmin and Uvsirect = Uvsimax - Uvsimin, respectively; and
set a target DC-link voltage Uxz to the maximum value of the rectified voltages such that Uxz = max(Uvsrrect, Uvsirect).

14. Multi-phase BBC (1) according to claim 13, wherein the control unit is configured to operate the VSR (2) with N-2 DPWM and the VSI (3) with N-1 DPWM when Uvsrrect > Uvsirect, and to operate the VSI (3) with N-2 DPWM and the VSR (2) with N-1 DPWM when Uvsirect > Uvsvrect, and to operate the VSI (3) and the VSR (2) both with N-2 DPWM when Uvsirect = Uvsrrect .

15. Multi-phase BBC (1) according to claim 14, wherein the control unit (4) is configured to calculate a common mode CM component injection for both N-1 DPWM operation and N-2 DPWM operation, as $Dvsr , cm = 2 Uvsrmin / Uxz and Dvsi , cm = 2 Uvsimin / Uxz ;$ and
add said CM component to duty cycles of the VSR (2) and the VSI (3) such that $Dvsr \left(j\right) = 2 Uvsr \left(j\right) / Uxz + Dvsr , cm ,$ and $Dvsi \left(k\right) = 2 Uvsi \left(k\right) / Uxz + Dvsi , cm .$
